# EUROPÄISCHE PATENTANMELDUNG

(11) **EP 1 643 726 A1**
(43) Veröffentlichungstag der Anmeldung: **05.04.2006**
(21) Anmeldenummer: 04023271.2
(22) Anmeldetag: 30.09.2004
(51) Int. Cl.: H04L 29/12

(54) **Verfahren zur Verhinderung von Datenpaketverlusten beim Aktualisieren einer Adresstabelle**

(71) Anmelder: SIEMENS AKTIENGESELLSCHAFT, 80333 München (DE)
(72) Erfinder: Meyer, Hannes, 83071 Stephanskirchen-Schlossb. (DE); Schwank, Klaus-Peter, 82152 Martinsried (DE); Seifert, Joachim, 81827 München (DE); Vierthaler, Richard, 80687 München (DE)
(74) Vertreter: Berg, Peter

(57) **Zusammenfassung**

Die Erfindung betrifft ein Verfahren zur Verhinderung von Datenpaketverlusten beim Aktualisieren einer Adresstabelle (AT), die in einem Rechner (R1) eines lokalen Netzwerkes (LN) abgelegt wird und Zuordnungen (ZO1, ZO2, ZO3) von im lokalen Netzwerk (LN) geltenden Rechneradressen (MAC1, MAC2, MAC3, MAC4) zu im Internet gültigen Rechneradressen (IP1, IP2, IP3, IP4) zum Versand von Datenpaketen (DP) umfasst, wobei eine in der Adresstabelle (AT) abgelegte Adresszuordnung (Z01, Z02, Z03) nach Ablauf eines Gültigkeitstimers (GT1, GT2, GT3) aktualisiert wird, wobei nach Ablauf des Gültigkeitstimers (GT1) einer Adresszuordnung (ZO1) die Adresszuordnung (ZO1) in der Adresstabelle (AT) markiert wird (1). Dann wird vom Rechner (R1) für diese Adresszuordnung (Z01) die im lokalen Netzwerk (LN) geltende Rechneradresse (MAC2) zur vorhandenen im Internet gültigen Rechneradresse (IP2) angefordert (3;4). Die ermittelte im lokalen Netzwerk (LN) geltende Rechneradresse (MAC2) wird dann in diese Adresszuordnung (ZO1) in der Adresstabelle(AT) eingetragen und die Markierung (M) für die Adresszuordnung (ZO1) zurückgesetzt.

Das erfindungsgemäße Verfahren hat den Vorteil, dass auch während der Aktualisierung der Adresszuordnung (ZO1, ZO2, ZO3) eine Adresszuordnung (ZO1, ZO2, ZO3) für einen Zielrechner (R2, R3, R4) zur Verfügung steht, wodurch Verluste von Datenpaketen (DP) verhindert werden und die Güte des lokalen Netzes (LN) erhalten bleibt.

## Beschreibung

Die Erfindung betrifft ein Verfahren zur Verhinderung von Paketverlusten beim Aktualisieren einer Adresstabelle, die in einem Rechner eines lokalen Netzwerkes abgelegt wird und Zuordnungen von im lokalen Netzwerk geltenden Rechneradressen zu im Internet gültigen Rechneradressen zum Versand von Datenpaketen umfasst, wobei eine in der Adresstabelle abgelegte Adresszuordnung nach Ablauf eines Gültigkeitstimers aktualisiert wird.

Als Internet wird im allgemeinen ein großes, globales, aber dezentrales Computernetzwerk bezeichnet, das aus vielen Teilnetzen besteht. Solche Teilnetze können beispielsweise lokale Netzwerke sein, die räumlich begrenzt sind. Diese Lokalen Netzwerke werden auch als Local Area Networks oder kurz LAN bezeichnet und können beispielsweise Rechnernetze von einzelnen Unternehmen oder Institutionen sein.

Für den Datentransfer im Internet bzw. von oder zu den einzelnen Teilnetzen des Internets wird das sogenannte Internet-Protokoll oder kurz IP eingesetzt. Das IP ist für den verbindungslosen Transport von Daten in Paketform - sogenannten IP-Datenpaketen - von einem Rechner in einem Teilnetz zu einem Zielrechner in einem Teilnetz über mehrere Teilnetze hinweg zuständig. Damit ein IP-Datenpaket zu einem bestimmten Rechner in einem Teilnetzwerk geleitet werden kann, wird im IP eine Adressierung der Rechner der Teilnetze vorgenommen. Jedem Rechner wird bei seiner Einrichtung eine im Internet gültige Rechneradresse, die sogenannte IP-Adresse zugewiesen. Diese Adressierung wird auf der Schicht 3 des OSI-Referenzmodells vorgenommen.

Mit der IP-Adresse ist ein Rechner im Internet bzw. im Teilnetz, dem er zugeordnet ist, eindeutig adressierbar. Das bedeutet, dass ein Datenpaket anhand dieser in Internet gültigen Adresse von einem sendenden Rechner zu einem Zielrechner übertragen wird, wobei die beiden Rechner in verschiedenen Teilnetzen liegen. Die Weiterleitung der Datenpakete zwischen den Teilnetzen erfolgt anhand der IP-Adresse.

Innerhalb eines Teilnetzes, besonders wenn dieses als LAN realisiert ist, wird die Adressierung der einzelnen Rechner im lokalen Netzwerk zusätzlich auf der Schicht 2 des OSI-Referenzmodells vorgenommen. In einem LAN wird daher, entsprechend der verschiedenen Schichten des OSI-Referenzmodells zwischen einer Hardware-Adresse, der sogenannten Media Access Control- oder MAC-Adresse, und der im Internet gültigen IP-Adresse unterschieden. Jeder Rechner in einem lokalen Netzwerk hat daher mindestens eine MAC- und eine IP-Adresse, über welche er angesprochen werden kann und welche dem Rechner bekannt sind. Für die Übertragung von Datenpaketen innerhalb eines lokalen Netzes von einem sendenden Rechner zu einem Zielrechner wird die MAC-Adresse eingesetzt, die weltweit eindeutig ist, wenn das LAN auf der sogenannten Ethernet-Technologie basiert.

Bei der Ethernet-Technologie werden die Daten über einen gemeinsamen Übertragungskanal transportiert. Der Zugriff auf diesen Übertragungskanal erfolgt nach dem Kollisionsverfahren. Das bedeutet, jeder Rechner, der Daten zu senden hat, greift auf den gemeinsamen Übertragungskanal zu, wenn dieser vom sendenden Rechner als frei erkannt wurde. Durch das Kollisionsverfahren wird das gleichzeitige Zugreifen von zwei Rechnern auf den Übertragungskanal erkannt und angezeigt. Der Sendevorgang wird von den Rechnern nach einer vorgegebenen Zeit wiederholt. Die Daten werden bei der Ethernet-Technologie in sogenannten Datagrammen oder Frames übertragen, deren Länge flexibel ist und in denen im Rahmenformat die Adresse des Zielrechners und die Adresse des sendenden Rechners innerhalb des lokalen Netzwerkes - also die MAC-Adressen der Rechner - eingetragen sind.

Soll nun ein Datenpaket, in dem die Adresse des Zielrechners als IP-Adresse mitverpackt ist, in einem als LAN realisierten Teilnetz zum Zielrechner geleitet werden, so muss für die Übertragung des Datenpaketes der IP-Adresse des Zielrechners eine im lokalen Netzwerk gültige Rechneradresse des Zielrechners zugeordnet werden. Bei einem auf Ethernet-Technologie basierenden LAN wird beispielsweise für die Übertragung das Datenpaket in einen Frame gepackt und in diesen Frame die MAC-Adresse des Zielrechners eingetragen. Anhand dieser im lokalen Netzwerk gültigen Adresse wird das Datenpaket zum Zielrechner gesendet.

Die zur IP-Adresse des Zielrechners gehörende, im lokalen Netzwerk gültige Adresse wird vom Rechner, der das Datenpaket weiterleitet, über ein Protokoll wie beispielsweise das Address Resolution Protocol erfragt. Das Address Resolution Protocol oder kurz auch ARP genannt hat die Aufgabe festzustellen, in welchem Format Rechneradressen vorliegen und die gegebenenfalls von einem Format auf das andere Format umzusetzen.

Damit nicht bei jedem Datenpaket, das an einen bestimmten Zielrechner in einem lokalen Netzwerk gesendet wird, die zugehörige im lokalen Netzwerk gültige Rechneradresse ermittelt werden muss, werden die Zuordnungen von im Internet gültiger Rechneradresse und im lokalen Netzwerk gültiger Rechneradresse in einer Adresstabelle abgespeichert. Die Adresszuordnungen in dieser Adresstabelle sind zumeist mit einem Timer versehen, durch den ihre Gültigkeit eingeschränkt wird. Das bedeutet, dass die Adresszuordnungen nach einer bestimmten Zeit, die durch Ablauf des Gültigkeitstimers bestimmt ist, aus der Adresstabelle gelöscht werden. Soll danach ein weiteres Datenpaket an einen Zielrechner gesendet werden, dessen Adresszuordnung aus der Adresstabelle gelöscht wurde, so muss die Zuordnung zwischen der im Internet gültigen Adresse des Zielrechners und der im lokalen Netzwerk gültigen Adresse neu ermittelt und wieder in der Adresstabelle hinterlegt werden.

Dabei tritt das Problem auf, dass während der neuerlichen Ermittlung der Adresszuordnung keine Datenpakete an diesen Zielrechner versendet werden können. Eine Übertragung von Datenpaketen kann erst nach dem Eintrag der Adresszuordnung in die Adresstabelle erfolgen.

Bei den aus dem Stand der Technik bekannten Lösungsansätzen werden Datenpakete, die während der Ermittlung und Abspeicherung der Adresszuordnung für einen Zielrechner an diesen Zielrechner gesendet werden sollen, in einem Puffer zwischengespeichert. Ist dieser Puffer allerdings mit Datenpaketen voll belegt und werden daher vom Puffer keine weiteren Datenpakete aufgenommen, so kommt es zum Verlust von Datenpaketen. Die Güte des lokalen Netzes, auch als Quality of Service bezeichnet, kann dann ebenfalls nicht mehr aufrecht erhalten werden. Das Auftreten dieses Paketverlustes ist von mehreren Faktoren wie zum Beispiel der Stärke des Datenverkehrs zum betroffenen Zielrechner im Moment des Ungültigwerdens der Adresszuordnung abhängig und daher schwer zu kalkulieren.

Der Erfindung liegt somit die Aufgabe zugrunde, ein Verfahren anzugeben, welches diese Art von Paketverlusten beim Bestimmen und Abspeichern der Adresszuordnung für einen Zielrechner in der Adresstabelle zu verhindern und die Güte des lokalen Netzes aufrecht zu erhalten.

Die geschieht erfindungsgemäß mit einem Verfahren zur Verhinderung von Datenpaketverlusten beim Aktualisieren einer Adresstabelle, die in einem Rechner eines lokalen Netzwerkes abgelegt wird und Zuordnungen von im lokalen Netzwerk geltenden Rechneradressen zu im Internet gültigen Rechneradressen zum Versand von Datenpaketen umfasst, wobei eine in der Adresstabelle abgelegte Adresszuordnung nach Ablauf eines Gültigkeitstimers aktualisiert wird, wobei nach Ablauf des Gültigkeitstimers einer Adresszuordnung die Adresszuordnung in der Adresstabelle markiert, vom Rechner für diese Adresszuordnung die im lokalen Netzwerk geltende Rechneradresse zur vorhandenen im Internet gültigen Rechneradresse angefordert, die ermittelte im lokalen Netzwerk geltende Rechneradresse in diese Adresszuordnung in der Adresstabelle eingetragen und die Markierung für die Adresszuordnung zurückgesetzt wird.

Das erfindungsgemäße Verfahren hat den Vorteil, dass auch während der Aktualisierung der Adresszuordnung eine Adresszuordnung für einen Zielrechner zur Verfügung steht, wodurch Verluste von Datenpaketen verhindert werden und die Güte des lokalen Netzes erhalten bleibt.

Vorteilhaft ist es, wenn die markierte Adresszuordnung weiterhin zum Versenden von Datenpaketen an die in dieser Adresszuordnung eingetragene im lokalen Netzwerk geltende Rechneradresse verwendet werden kann. Auf diese Weise wird die Warteschlange an Datenpaketen im Puffer reduziert. Der Puffer wird so nicht mit Datenpaketen voll belegt. Es gehen daher keine Datenpakete aufgrund eines vollen Puffers verloren.

Günstig ist es dabei, wenn der Markierung der Adresszuordnung in der Adresstabelle die Bedeutung "Zuordnung abgelaufen" zugewiesen wird. Dadurch ist im lokalen Netz bekannt, dass diese Adresszuordnung gerade aktualisiert wird.

Vorteilhaft ist es dabei weiterhin, wenn nach Ablauf des Gütligkeitstimers die markierte Adresszuordnung in der Adresstabelle dann gelöscht wird, wenn diese Adresszuordnung nicht für den Versand von Datenpaketen angefordert wird. Auf diese Weise wird verhindert, dass überalterte Adresszuordnungen in der Adresstabelle erhalten bleiben, die für die Übertragung von Datenpaketen nicht mehr benötigt werden.

Weiterhin ist es günstig, wenn für die Realisierung des lokalen Netzwerkes Ethernet-Technologie verwendet wird. Dies insbesondere, weil die Ethernet-Technologie bei lokalen Netzwerken weit verbreitet ist. Im Jahr 2000 wurde der Anteil von lokalen Netzwerken, die auf Ethernet-Technologie basieren, auf 80% geschätzt.

Weiterhin ist es vorteilhaft, wenn für die Ermittlung der Adresszuordnung der im lokalen Netz geltenden Rechneradresse zu einer im Internet gültigen Rechneradresse das Address Resolution Protocol verwendet wird. Dies insbesondere deswegen, weil das Address Resolution Protocol auf einfache Weise Rechneradressen zwischen verschiedenen Adressierungsprotokollen umsetzt.

Die Erfindung wird anhand einer Figur näher erläutert. Diese zeigt beispielhaft den funktionellen Aufbau eines lokalen Netzes, in dem das erfindungsgemäße Verfahren angewendet wird.

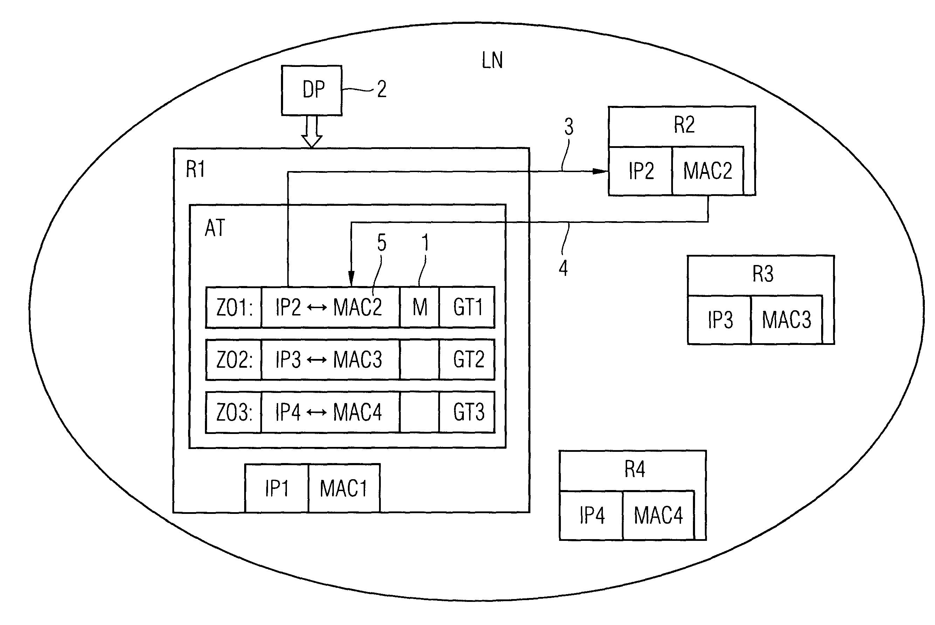

Figur 1 zeigt einen Rechner R1 in einem lokalen Netzwerk LN, das noch weitere Rechner R2, R3, R4 umfasst. Auf jedem Rechner R1, R2, R3, R4 sind die Internet gültige Adresse IP1, IP2, IP3, IP4 sowie die im lokalen Netzwerk LN gültige Adresse MAC1, MAC2, MAC3, MAC4 des jeweiligen Rechners R1, R2, R3, R4 hinterlegt.

Auf dem Rechner R1 ist zusätzlich eine Adresstabelle AT gespeichert, in der Adresszuordnungen ZO1 bis ZO3 für die Übertragung von Datenpaketen DP zu einem Rechner R2, R3, R4 des lokalen Netzwerkes LN hinterlegt sind. Durch die Adresszuordnung ZO1 wird beispielsweise die im Internet gültige Adresse IP2 des Rechners R2 mit der im lokalen Netzwerk LN gültigen Adresse MAC2 dieses Rechners R2 verknüpft. Soll nun ein Datenpaket DP vom Rechner R1 an den Rechner R2 gesendet werden, so wird anhand der im Internet gültigen Adresse IP2 des Rechners R2 in der Adresstabelle AT die entsprechende Adresszuordnung ZO1 gesucht. Durch die Adresszuordnung ZO1 wird die im lokalen Netzwerk LN gültige Adresse MAC2 des Rechners R2 ermittelt, um das Datenpaket DP an den Rechner R2 zu senden.

Zu jeder Adresszuordnung ZO1 bis Z03 gibt es in der Adresstabelle AT einen Gültigkeitstimer GT1 bis GT3. Wenn für die Adresszuordnung ZO1 der Gültigkeitstimer GT1 abgelaufen ist, so wird in einem Schritt 1 die Adresszuordnung ZO1 mit einem Marker M gekennzeichnet. Der Marker M gibt an, dass die Adresszuordnung ZO1 eigentlich den Status "Zuordnung abgelaufen" hat.

Wird nun in einem Schritt 2 ein Datenpaket DP entsprechend der Adresszuordnung ZO1 mit dem Status "Zuordnung abgelaufen" versendet, so wird in einem Schritt 3 vom sendenden Rechner R1 die aktuelle im lokalen Netzwerk LN gültige Adresse MAC2 des Zielrechners R2 mittels Adress Resolution Protocol angefordert. Vom Rechner R2 wird daraufhin in einem Schritt 4 seine im lokalen Netzwerk LN gültige Adresse MAC2 an den Rechner R1 übermittelt. In einem Schritt 5 wird in der Adressezuordnung ZO1 in der Adresstabelle AT der ermittelte im lokalen Netzwerk LN gültige Adresse MAC2 des Rechners R2 eingetragen und so mit der in Internet gültigen Adresse IP2 des Rechners R2 verknüpft. Der Marker M in der Adresszuordnung ZO1 wird daraufhin zurückgesetzt.

Für den Fall, dass innerhalb einer bestimmten Zeitspanne nach Ablauf des Gültigkeitstimer GT1 anhand der Adresszuordnung ZO1 keine Datenpakete DP im lokalen Netzwerk LN übertragen werden sollen, wird die mit dem Marker M versehene Adresszuordnung ZO1 aus der Adresstabelle AT gelöscht.

## Patentansprüche

1. Verfahren zur Verhinderung von Datenpaketverlusten beim Aktualisieren einer Adresstabelle (AT), die in einem Rechner (R1) eines lokalen Netzwerkes (LN) abgelegt wird und Zuordnungen (ZO1, ZO2, ZO3) von im lokalen Netzwerk (LN) geltenden Rechneradressen (MAC1, MAC2, MAC3, MAC4) zu im Internet gültigen Rechneradressen (IP1, IP2, IP3, IP4) zum Versand von Datenpaketen (DP) umfasst, wobei eine in der Adresstabelle (AT) abgelegte Adresszuordnung (ZO1, ZO2, ZO3) nach Ablauf eines Gültigkeitstimers (GT1, GT2, GT3) aktualisiert wird, **dadurch gekennzeichnet , dass** nach Ablauf des Gültigkeitstimers (GT1) einer Adresszuordnung (ZO1) die Adresszuordnung (ZO1) in der Adresstabelle (AT) markiert wird (1), dass vom Rechner (R1) für diese Adresszuordnung (ZO1) die im lokalen Netzwerk (LN) geltende Rechneradresse (MAC2) zur vorhandenen im Internet gültigen Rechneradresse (IP2) angefordert wird (3;4), dass die ermittelte im lokalen Netzwerk (LN) geltende Rechneradresse (MAC2) in diese Adresszuordnung (ZO1) in der Adresstabelle (AT) eingetragen (5) und die Markierung (M) für die Adresszuordnung (ZO1) zurückgesetzt wird.

2. Verfahren nach Anspruch 1 **dadurch**
**gekennzeichnet , dass** die markierte Adresszuordnung (ZO1) weiterhin zum Versenden von Datenpaketen (DP) an die in dieser Adresszuordnung (ZO1) eingetragene im lokalen Netzwerk (LN) geltende Rechneradresse (IP2) verwendet wird (2).

3. Verfahren nach einem der Ansprüche 1 bis 2 **dadurch gekennzeichnet , dass** der Markierung (M) der Adresszuordnung (ZO1) in der Adresstabelle (AT) die Bedeutung "Zuordnung abgelaufen" zugewiesen wird.

4. Verfahren nach einem der Ansprüche 1 bis 3 **dadurch gekennzeichnet , dass** nach Ablauf des Gütligkeitstimers (GT1) die markierte Adresszuordnung (ZO1) in der Adresstabelle (AT) gelöscht wird, wenn diese Adresszuordnung (ZO1) nicht für den Versand von Datenpaketen (DP) angefordert wird.

5. Verfahren nach einem der Ansprüche 1 bis 4 **dadurch gekennzeichnet , dass** für die Realisierung des lokalen Netzwerkes (LN) Ethernet-Technologie verwendet wird.

6. Verfahren nach einem der Ansprüche 1 bis 5 **dadurch gekennzeichnet , dass** für die Ermittlung der Adresszuordnung (ZO1, ZO2, ZO3) der im lokalen Netz (LN) geltenden Rechneradresse (MAC1, MAC2, MAC3, MAC4) zu einer im Internet gültigen Rechneradresse (IP1, IP2, IP3, IP4) das Address Resolution Protocol verwendet wird.
